(19) Europäisches Patentamt / European Patent Office / Office européen des brevets

(11) **EP 4 290 625 A1**

(12) **EUROPEAN PATENT APPLICATION**
published in accordance with Art. 153(4) EPC

(43) Date of publication:
**13.12.2023  Bulletin 2023/50**

(21) Application number: **21924792.1**

(22) Date of filing: **24.11.2021**

(51) International Patent Classification (IPC):
**H01M 8/04** $^{(2016.01)}$        **H01M 8/04228** $^{(2016.01)}$
**H01M 8/04303** $^{(2016.01)}$     **H01M 8/04694** $^{(2016.01)}$
**H01M 8/04701** $^{(2016.01)}$     **H01M 8/10** $^{(2016.01)}$

(52) Cooperative Patent Classification (CPC):
**H01M 8/04; H01M 8/04228; H01M 8/04303;
H01M 8/04694; H01M 8/04701; H01M 8/10;
Y02E 60/50**

(86) International application number:
**PCT/JP2021/042977**

(87) International publication number:
**WO 2022/168406 (11.08.2022 Gazette 2022/32)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **02.02.2021   JP 2021014722**

(71) Applicant: **Panasonic Intellectual Property
Management Co., Ltd.
Osaka-shi, Osaka 540-6207 (JP)**

(72) Inventors:
• **AKATSUKA, Takuya
  Osaka-shi,Osaka 540-6207 (JP)**
• **IIYAMA, Shigeru
  Osaka, Osaka 540-6207 (JP)**

(74) Representative: **Grünecker Patent- und
Rechtsanwälte
PartG mbB
Leopoldstraße 4
80802 München (DE)**

(54)   **FUEL CELL SYSTEM AND METHOD FOR OPERATING SAME**

(57)      A fuel cell system (100) includes a fuel cell stack (4), a cooling water path (40), a cooling water tank (30), a cooling water pump (10), an oxidant gas supply unit (15), an oxidant gas supply path (11), an oxidant gas humidification path (12), an oxidant gas discharge path (13), and an off-gas path (14). The fuel cell system (100) is configured to control the temperature of a remaining oxidant gas to prevent a cathode (4b) from being filled with cooling water (30r) during the stop of power generation of the fuel cell stack (4) although the inlet of the oxidant gas humidification path (12) is completely submerged in water.

FIG. 1

EP 4 290 625 A1

**Description**

BACKGROUND

1. Technical Field

The present disclosure relates to a fuel cell system including a cooling water tank configured to collect water generated in a fuel cell stack, and a method for operating the fuel cell system.

2. Description of the Related Art

Patent Literature 1 discloses a fuel cell system configured to switch an opening-and-closing valve during the stop of power generation and supply a part of cooling water to a cathode to fill the cathode with the cooling water, and thereby substantially prevent air from flowing into the cathode.
This fuel cell system includes a fuel gas supply path, a fuel cell stack, an unreacted fuel gas discharge path, an oxidant gas supply path, an oxidant gas discharge path, a cooling water path, a cooling water pump, a cooling water tank, a cooling water supply line, a first water valve, a cooling water discharge line, and a second water valve.

Citation List

Patent Literature 1: Japanese Unexamined Patent Application Publication No. 2013-26182

SUMMARY

The present disclosure provides a fuel cell system and a method for operating the fuel cell system, the fuel cell system being capable of substantially preventing air from flowing into a cathode during the stop of power generation of the fuel cell system, without filling the cathode with cooling water.
The fuel cell system according to the present disclosure includes a fuel cell stack, a cooling water path, a cooling water tank, a cooling water pump, an oxidant gas supply unit, an oxidant gas supply path, an oxidant gas humidification path, an oxidant gas discharge path, and an off-gas path.
The fuel cell stack is a polymer electrolyte fuel cell stack configured to generate electric power by causing a reaction between a fuel gas supplied to an anode of the fuel cell stack and an oxidant gas supplied to a cathode of the fuel cell stack.
The cooling water path is configured to allow the circulation of cooling water that exchanges heat with the fuel cell stack.
The cooling water tank is an approximately closed tank provided at a position vertically lower than the fuel cell stack in the cooling water path. The cooling water tank includes a gas storage and a cooling water storage configured to store the cooling water. In an installed state of the fuel cell system, the gas storage is positioned above the cooling water storage. The gas storage is divided into a first space and a second space in a manner that prevents the first space and the second space from communicating with each other, regardless of an operational state of the fuel cell stack.
The cooling water pump is provided in the cooling water path so as to pump up the cooling water in the cooling water tank and supply the cooling water to the fuel cell stack.
The oxidant gas supply unit is configured to supply an oxidant gas. The oxidant gas supply path is configured to connect the oxidant gas supply unit to the cooling water tank so as to allow the supply of the oxidant gas to the cooling water in the cooling water storage below the first space.
The oxidant gas humidification path is configured to allow the supply, to the cathode, of the oxidant gas discharged from the oxidant gas supply path and humidified and collected in the first space, and has an inlet opened to the first space and an outlet connected to an inlet of the cathode.
The oxidant gas discharge path is configured to allow the supply of the oxidant gas discharged from the outlet of the cathode without being used for the reaction in the fuel cell stack, to the cooling water in the cooling water storage below the second space. The oxidant gas discharge path has an inlet connected to the outlet of the cathode and an outlet opened to the cooling water in the cooling water storage below the second space.
The off-gas path is configured to allow the discharge, to the outside, of the oxidant gas discharged from the oxidant gas discharge path, subjected to gas-liquid separation, and collected in the second space, and has an inlet opened to the second space and an outlet opened to the outside.
The fuel cell system according to the present disclosure is configured to control the temperature of remaining oxidant gas so that, during the stop of power generation of the fuel cell stack, the cathode is prevented from being filled with the cooling water although the inlet of the oxidant gas humidification path is completely submerged in water.

The method for operating the fuel cell system according to the present disclosure is a method for operating a fuel cell system, the fuel cell system including a fuel cell stack, a cooling water path, a cooling water tank, a cooling water pump, an oxidant gas supply unit, an oxidant gas supply path, an oxidant gas humidification path, an oxidant gas discharge path, an off-gas path, and a heater. The fuel cell stack is a polymer electrolyte fuel cell stack configured to generate electric power by causing a reaction between a fuel gas supplied to an anode of the fuel cell stack and an oxidant gas supplied to a cathode of the fuel cell stack. The cooling water path is configured to allow the circulation of cooling water that exchanges heat with the fuel cell stack. The cooling water tank is an approximately closed tank provided at a position vertically lower than the fuel cell stack in the cooling water path. The cooling water tank includes a gas storage and a cooling water storage configured to store the cooling water. In the installed state of the fuel cell system, the gas storage is positioned above the cooling water storage. The gas storage is divided into a first space and a second space in a manner that prevents the first space and the second space from communicating with each other, regardless of an operational state of the fuel cell stack. The cooling water pump is provided in the cooling water path so as to pump up cooling water in the cooling water tank and supply the cooling water to the fuel cell stack. The oxidant gas supply unit is configured to supply the oxidant gas. The oxidant gas supply path is configured to connect the oxidant gas supply unit to the cooling water tank to allow the supply of the oxidant gas to cooling water in the cooling water storage below the first space. The oxidant gas humidification path has an inlet opened to the first space and an outlet connected to an inlet of the cathode so as to allow the supply, to the cathode, of the oxidant gas discharged from the oxidant gas supply path and humidified and collected in the first space. The oxidant gas discharge path is configured to allow the supply of the oxidant gas discharged from an outlet of the cathode without being used for the reaction in the fuel cell stack, to the cooling water in the cooling water storage below the second space. The oxidant gas discharge path has an inlet connected to the outlet of the cathode and an outlet opened to the cooling water in the cooling water storage below the second space. The off-gas path has an inlet opened to the second space and an outlet opened to the outside so as to allow the discharge, to the outside, of the oxidant gas discharged from the oxidant gas discharge path, subjected to gas-liquid separation, and collected in the second space. The heater is provided in the cooling water tank and configured to adjust the temperature of the cooling water. In the method for operating the fuel cell system according to the present disclosure, the fuel cell system continues to operate the cooling water pump even after the stop of power generation of the fuel cell stack. Furthermore, in the method for operating the fuel cell system according to the present disclosure, the fuel cell system adjusts the temperature of the cooling water by using the heater so that, during the stop of power generation of the fuel cell stack, the cathode is not filled with cooling water although the inlet of the oxidant gas humidification path is completely submerged in water.

The fuel cell system according to the present disclosure and method for operating the fuel cell system according to the present disclosure are capable of substantially preventing air from flowing into the cathode during the stop of power generation of the fuel cell stack, without the cathode being filled with the cooling water during the stop of power generation.

BRIEF DESCRIPTION OF THE DRAWINGS

FIG. 1 is a block diagram illustrating a configuration of a fuel cell system in a first embodiment according to the present disclosure.
FIG. 2 is a diagram illustrating a relation between the pressure and the volume of remaining oxidant gas, with respect to the temperature of the remaining oxidant gas in the first embodiment according to the present disclosure.
FIG. 3 is a block diagram illustrating a configuration of a fuel cell system in a second embodiment according to the present disclosure.

DETAILED DESCRIPTIONS

A fuel cell system according to the present disclosure includes a fuel cell stack, a cooling water path, a cooling water tank, a cooling water pump, an oxidant gas supply unit, an oxidant gas supply path, an oxidant gas humidification path, an oxidant gas discharge path, and an off-gas path. The fuel cell stack is a polymer electrolyte fuel cell stack configured to generate electric power by causing a reaction between a fuel gas supplied to an anode of the fuel cell stack and an oxidant gas supplied to a cathode of the fuel cell stack. The cooling water path is configured to allow the circulation of cooling water that exchanges heat with the fuel cell stack. The cooling water tank is an approximately closed tank provided at a position vertically lower than the fuel cell stack in the cooling water path. The cooling water tank includes a gas storage and a cooling water storage configured to store the cooling water. In the installed state of the fuel cell system, the gas storage is positioned above the cooling water storage. The gas storage is divided into a first space and a second space in a manner that prevents the first space and the second space from communicating with each other, regardless of an operational state of the fuel cell stack. The cooling water pump is provided in the cooling water path so as to pump up the cooling water in the cooling water tank and supply the cooling water to the fuel cell stack. The oxidant gas supply unit is configured to supply the oxidant gas. The oxidant gas supply path is configured to connect the oxidant gas supply unit to the cooling water tank so as to allow the supply of the oxidant gas to the cooling water in the cooling water storage below the first space. The oxidant gas humidification path has an inlet opened to the first space and an outlet connected to an inlet of the cathode so as to allow the supply, to the cathode, of the oxidant gas discharged from the oxidant gas supply path and humidified and collected in the first space. The oxidant gas discharge path is configured to allow the discharge of the oxidant gas discharged from the outlet of the cathode without being used for the reaction in the fuel cell stack, to the cooling water in the cooling water storage below the second space. The oxidant gas discharge path has an inlet connected to the outlet of the cathode and an outlet opened to the cooling water in the cooling water storage below the second space. The off-gas path has an inlet opened to the second space and an outlet opened to the outside so as to allow the discharge, to the outside, of the oxidant gas discharged from the oxidant gas discharge path, subjected to gas-liquid separation, and collected in the second space. The fuel cell system according to the present disclosure is configured to control the temperature of remaining oxidant gas so that, during the stop of power generation of the fuel cell stack, the cathode is prevented from being filled with the cooling water although the inlet of the oxidant gas humidification path is completely submerged in water.

The fuel cell system according to the present disclosure is capable of sealing a cathode path without filling the cathode with the cooling water during the stop of power generation of the fuel cell stack.

Thus, during the stop of power generation, the inflow of air is substantially prevented without the cooling water remaining in the cathode, so that water clogging at startup (at the start of power generation) can be substantially prevented to achieve stable power generation.

The fuel cell system according to the present disclosure may further include a heater and a controller. The heater may be provided in the cooling water tank to adjust the temperature of the cooling water. The controller may continue to operate the cooling water pump even after the stop of power generation of the fuel cell stack. Furthermore, the controller may control the temperature of remaining oxidant gas by adjusting the temperature of the cooling water by using the heater so as to prevent the cathode from being filled with the cooling water during the stop of power generation of the fuel cell stack although the inlet of the oxidant gas humidification path is completely submerged in water.

The fuel cell system according to the present disclosure may further include a thermometer. The thermometer may measure the temperature of the cooling water discharged from the fuel cell stack or the temperature of the oxidant gas discharged from the fuel cell stack. The controller may estimate the temperature of the oxidant gas in the cathode, based on a value of the thermometer.

The fuel cell system according to the present disclosure may further include a water gauge. The water gauge may be provided in the oxidant gas discharge path and configured to detect the water level of the cooling water in the oxidant gas discharge path. The controller may adjust the heating amount of the heater during the stop of power generation of the fuel cell stack so that the water gauge detects a predetermined water level.

A method for operating a fuel cell system according to the present disclosure is a method for operating a fuel cell system, the fuel cell system including a fuel cell stack, a cooling water path, a cooling water tank, a cooling water pump, an oxidant gas supply unit, an oxidant gas supply path, an oxidant gas humidification path, an oxidant gas discharge path, an off-gas path, and a heater. The fuel cell stack is a polymer electrolyte fuel cell stack configured to generate electric power by causing a reaction between a fuel gas supplied to an anode of the fuel cell stack and an oxidant gas supplied to a cathode of the fuel cell stack. The cooling water path is configured to allow the circulation of cooling water that exchanges heat with the fuel cell stack. The cooling water tank is an approximately closed tank provided at a position vertically lower than the fuel cell stack in the cooling water path. The cooling water tank includes a gas storage and a cooling water storage configured to store the cooling water. In the installed state of the fuel cell system, the gas storage is positioned above the cooling water storage. The gas storage is divided into a first space and a second space in a manner that prevents the first space and the second space from communicating with each other, regardless of an operational state of the fuel cell stack. The cooling water pump is provided in the cooling water path so as to pump up the cooling water in the cooling water tank and supply the cooling water to the fuel cell stack. The oxidant gas supply unit is configured to supply the oxidant gas. The oxidant gas supply path is configured to connect the oxidant gas supply unit to the cooling water tank so as to allow the supply of the oxidant gas to the cooling water in the cooling water storage below the first space. The oxidant gas humidification path has an inlet opened to the first space and an outlet connected to an inlet of the cathode so as to allow the supply, to the cathode, of the oxidant gas discharged from the oxidant gas supply path and humidified and collected in the first space. The oxidant gas discharge path is configured to allow the discharge of the oxidant gas discharged from an outlet of the cathode without being used for the reaction in the fuel cell stack, to the cooling water in the cooling water storage below the second space. The oxidant gas discharge path has an inlet connected to the outlet of the cathode and an outlet opened to the cooling water in the cooling water storage below the second space. The off-gas path has an inlet opened to the second space and an outlet opened to the outside so as to allow the discharge, to the outside, of the oxidant gas discharged from the oxidant gas discharge path, subjected to gas-liquid separation, and collected in the second space. The heater is provided in the cooling water tank and configured to adjust the temperature of the cooling water. In the method for operating the fuel cell system according to the present disclosure, the fuel cell system continues to operate the cooling water pump even after the stop of power generation of the fuel cell stack. Furthermore, in the method for operating the fuel cell system according to the present disclosure, the fuel cell system adjusts the temperature of the cooling water by using the heater so that, during the stop of power generation of the fuel cell stack, the cathode is not filled with the cooling water although the inlet of the oxidant gas humidification path is completely submerged in water.

(Underlying Knowledge Forming Basis of the Present Disclosure)

Since the inventors came up with the present disclosure, fuel cell systems have been configured to cut off the inflow of air into a cathode of a fuel cell stack during the stop of power generation and thereby prevent deterioration in a catalyst of the stack.

Therefore, in the art, reducing the inflow of air into the cathode during the stop of power generation while minimizing a decrease in efficiency in power generation and an increase in costs is taken as a problem to be solved, and product design is carried out commonly such that a part of the cooling water is supplied to the cathode to fill the cathode with the cooling water.

However, the inventors found a new problem that, when the cathode is filled with cooling water, the cooling water filled in the cathode must be sufficiently discharged before the resumption of power generation. To solve the problem, the inventors accomplished configurations about the subject matters of the present disclosure.

Thus, the present disclosure provides a fuel cell system and a method for operating the fuel cell system that are capable of substantially preventing the inflow of air into a cathode during the stop of power generation, without filling the cathode with cooling water.

Hereinafter, embodiments will be described in detail with reference to the drawings. Descriptions that are more detailed than necessary may, however, be omitted. For example, detailed descriptions on already well-known matters and overlapping descriptions on substantially the same configurations may be omitted.

The accompanying drawings and the following descriptions are provided to help those skilled in the art fully understand the present disclosure, and do not intend to thereby restrict the subject matters recited in the claims.

(First Embodiment)

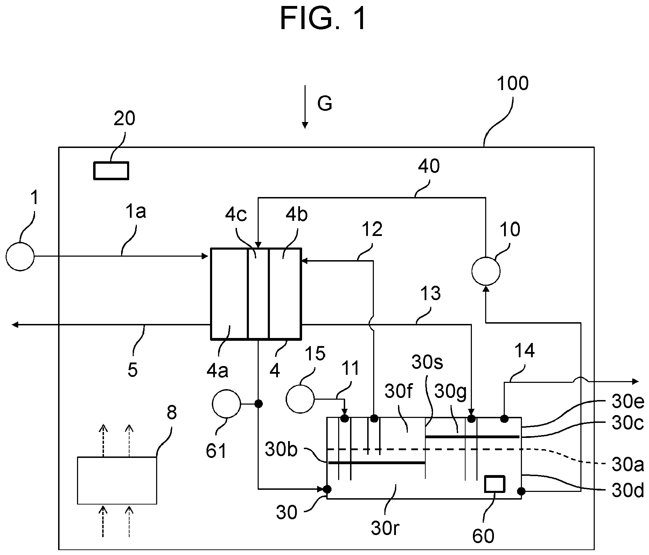

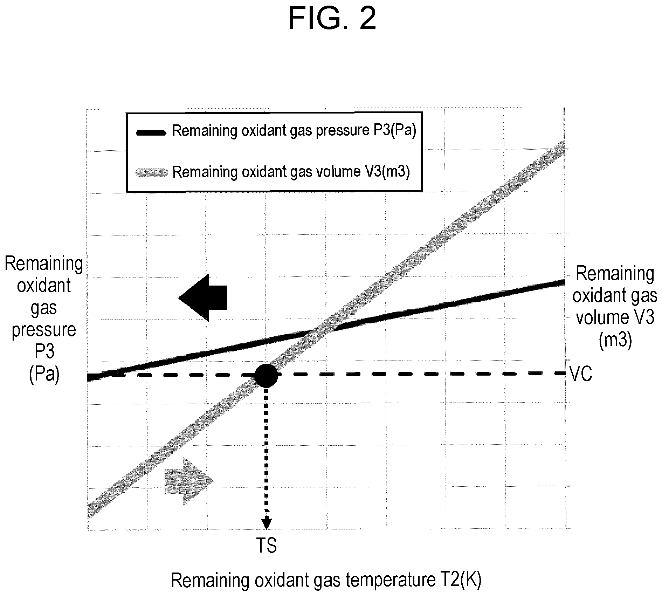

Hereinafter, using FIG. 1 and FIG. 2, fuel cell system 100 in a first embodiment will be described as an example of the fuel cell system according to the present disclosure.

[1-1. Configuration]

FIG. 1 is a block diagram illustrating a configuration of fuel cell system 100 in the first embodiment. As illustrated in FIG. 1, fuel cell system 100 includes fuel gas supply path 1a, fuel cell stack 4, unreacted fuel gas discharge path 5, controller 8, cooling water pump 10, oxidant gas supply path 11, oxidant gas humidification path 12, oxidant gas discharge path 13, off-gas path 14, oxidant gas supply unit 15, barometer 20, cooling water tank 30, cooling water path 40, heater 60, and first thermometer 61.

The direction of G in FIG. 1 indicates the direction of gravity. In other words, constituents illustrated on the upper side of FIG. 1 are present at vertically relatively higher positions, meanwhile constituents illustrated on the lower side of FIG. 1 are present at vertically relatively lower positions. Hereinafter, as illustrated in FIG. 1, a vertical direction in a state (corresponding to the installed state of the fuel cell system 100 according to the present disclosure) in which fuel cell system 100 is installed so that cooling water tank 30 is present at a lower position may be sometimes described as an up-and-down direction. The same goes for fuel cell system 200 in a second embodiment described later.

Fuel cell stack 4 is, for example, a polymer electrolyte fuel cell stack configured to generate electric power by causing a reaction between a fuel gas supplied to anode 4a from fuel gas supply device 1 and an oxidant gas supplied to cathode 4b.

Fuel cell stack 4 is a polymer electrolyte fuel cell stack as described above, and has a configuration in which a plurality of single cells are stacked in the thickness direction (in the horizontal direction in FIG. 1) and the single cells are electrically connected in series. Fuel cell stack 4 is configured to generate electric power by causing a reaction between a fuel gas supplied to anode 4a and an oxidant gas (air) supplied to cathode 4b.

Each of the single cells includes an electrolyte membrane-electrode assembly in which electrolyte membrane 4c formed of a hydrogen ion-conducting polymer is sandwiched by an anode electrode and a cathode electrode. The single cell has a configuration in which the electrolyte membrane-electrode assembly is sandwiched by an anode separator having a grooved anode path formed in a surface in contact with the anode electrode and a cathode separator having a grooved cathode path formed in a surface in contact with the cathode electrode.

Anode 4a of fuel cell stack 4 illustrated in FIG. 1 is a combination of the anode electrode and the anode separator. Cathode 4b of fuel cell stack 4 is a combination of the cathode electrode and the cathode separator.

Fuel cell stack 4 is oriented for use so that both main surfaces of electrolyte membrane 4c are arranged approximately in parallel to the vertical direction.

Anode 4a includes an inlet and an outlet. The inlet of anode 4a is a hole for supplying hydrogen-containing gas to anode 4a. The outlet of anode 4a is a hole for discharging, from anode 4a, (unreacted) hydrogen-containing gas not having been used for power generation, of the hydrogen-containing gas supplied to anode 4a.

The anode path is formed so that the hydrogen-containing gas having flown into the anode path from the inlet flows meanderingly toward the outlet without going against the gravity.

Cathode 4b includes an inlet and an outlet. The inlet of cathode 4b is a hole for supplying an oxidant gas to cathode 4b. The outlet of cathode 4b is a hole for discharging, from cathode 4b, (unreacted) oxidant gas not having been used for power generation, of the oxidant gas supplied to cathode 4b, and water (water vapor) generated by an electrochemical reaction in fuel cell stack 4.

The cathode path is formed so that the oxidant gas having flown into the cathode path from the inlet and water (water vapor) generated in cathode 4b by the electrochemical reaction in fuel cell stack 4 flows meanderingly toward the outlet without going against the gravity.

Cooling water path 40 is annularly configured so as to allow the circulation of cooling water 30r that exchanges heat with fuel cell stack 4 (to adjust the operational temperature of fuel cell stack 4).

Cooling water tank 30 is an approximately closed tank provided at a position vertically lower (lower in the gravity direction) than fuel cell stack 4 in cooling water path 40. Cooling water tank 30 includes gas storage 30e above cooling water storage 30d configured to store cooling water 30r. Gas storage 30e is divided into first space 30f and second space 30g by shielding plate 30s. Shielding plate 30s separates first space 30f from second space 30g to prevent first space 30f and second space 30g from communicating with each other.

During the stop of power generation of fuel cell stack 4 (when the fuel gas and the oxidant gas are not supplied to fuel cell stack 4), both the level of a liquid surface serving as the lower surface of first space 30f and the level of a liquid surface serving as the lower surface of second space 30g are equal to the level of power-generation-stop liquid surface 30a.

During the power generation of fuel cell stack 4 (when the fuel gas and the oxidant gas are supplied to fuel cell stack 4), the level of first operational liquid surface 30b serving as the lower surface of first space 30f is lower than the level of second operational liquid surface 30c serving as the lower surface of second space 30g. However, shielding plate 30s extends downward from the upper part of gas storage 30e (the top surface of cooling water tank 30) to a point below first operational liquid surface 30b, so that first space 30f and second space 30g do not communicate with each other.

In cooling water tank 30, an inlet for cooling water 30r flowing through cooling water path 40 is provided in a portion of a side wall on the first space 30f side, the portion being positioned lower than first operational liquid surface 30b. Furthermore, in cooling water tank 30, an outlet for cooling water 30r flowing through cooling water path 40 is provided in a portion of a side wall on the second space 30g side, the portion being positioned lower than power-generation-stop liquid surface 30a. Furthermore, cooling water tank 30 is configured such that the inlet of cooling water 30r flowing through cooling water path 40 faces the outlet of cooling water 30r flowing through cooling water path 40.

Cooling water pump 10 is provided in cooling water path 40 so as to be positioned vertically higher than fuel cell stack 4, and configured to pump up cooling water 30r in cooling water tank 30 and supply cooling water 30r to fuel cell stack 4.

Fuel gas supply device 1 is a fuel gas infrastructure having a predetermined supply pressure. In the present embodiment, hydrogen-containing gas mainly containing hydrogen is used as an example of the fuel gas in the present disclosure.

Fuel gas supply path 1a is configured to allow the supply of the fuel gas in fuel gas supply device 1 to anode 4a of fuel cell stack 4, and connects an outlet for the fuel gas in fuel gas supply device 1 to the inlet of anode 4a of fuel cell stack 4.

Unreacted fuel gas discharge path 5 is configured to allow the discharge, to the outside of fuel cell system 100, of the unreacted fuel gas discharged from the outlet of anode 4a without being used for power generation (electrochemical reaction) out of the fuel gas supplied to fuel cell stack 4. An inlet of unreacted fuel gas discharge path 5 is connected to the outlet of anode 4a.

Oxidant gas supply unit 15 is provided in an inlet of oxidant gas supply path 11, and includes a pump. Oxidant gas supply unit 15 is configured to increase the pressure of the open air and supply the air for power generation to cathode 4b.

Note that oxidant gas supply unit 15 has no function to cut off the oxidant gas, and accordingly, when oxidant gas supply unit 15 is stopped, the oxidant gas can pass through oxidant gas supply unit 15 owing to a convection and a pressure difference.

Oxidant gas supply path 11 is configured to allow the supply of the oxidant gas from oxidant gas supply unit 15 to cooling water 30r in cooling water storage 30d below first space 30f in cooling water tank 30. Oxidant gas supply path 11 connects oxidant gas supply unit 15 to cooling water tank 30. Oxidant gas supply path 11 penetrates the top surface of cooling water tank 30 on the first space 30f side and extends downward, and includes an outlet at a position below first operational liquid surface 30b and away from shielding plate 30s.

The oxidant gas supplied into cooling water 30r in cooling water tank 30 through oxidant gas supply path 11 is bubbled and supplied to first space 30f, so that, as long as oxidant gas supply unit 15 is operated, the humidity of first space 30f is higher than that of the open air.

Furthermore, oxidant gas supply path 11 includes the outlet at a position away from shielding plate 30s, so that the oxidant gas supplied from oxidant gas supply path 11 can be substantially prevented from being supplied to second space 30g over shielding plate 30s.

Oxidant gas humidification path 12 is configured to allow the supply, to cathode 4b, of the oxidant gas discharged from oxidant gas supply path 11 to cooling water 30r and humidified and collected in first space 30f. Oxidant gas humidification path 12 has an inlet opened to first space 30f and an outlet connected to the inlet of cathode 4b.

Oxidant gas humidification path 12 penetrates the top surface of cooling water tank 30 on the first space 30f side and extends downward, and includes the inlet positioned below power-generation-stop liquid surface 30a and positioned above first operational liquid surface 30b.

Oxidant gas discharge path 13 is configured to allow the supply, to cooling water tank 30, of yet-to-be-used oxidant gas discharged from the outlet of cathode 4b and water (water vapor) generated in cathode 4b by an electrochemical reaction in fuel cell stack 4. The yet-to-be-used oxidant gas discharged from the outlet of cathode 4b is an oxidant gas not having been used for power generation (electrochemical reaction), out of the oxidant gas supplied to fuel cell stack 4. Oxidant gas discharge path 13 is configured to allow the supply of the yet-to-be-used oxidant gas from the outlet of cathode 4b and water (water vapor) generated in cathode 4b, to cooling water 30r in cooling water storage 30d below second space 30g.

Furthermore, oxidant gas discharge path 13 has an inlet connected to the outlet of cathode 4b and an outlet opened to cooling water 30r in cooling water storage 30d below second space 30g. Oxidant gas discharge path 13 is configured to form a down slope from the inlet toward the outlet.

Furthermore, oxidant gas discharge path 13 penetrates the top surface of cooling water tank 30 on the second space 30g side and extends downward, and includes an outlet positioned below power-generation-stop liquid surface 30a and positioned above second operational liquid surface 30c.

Off-gas path 14 is configured to allow the discharge, to the outside of fuel cell system 100, of the oxidant gas discharged from oxidant gas discharge path 13, to cooling water 30r, subjected to gas-liquid separation, and collected in second space 30g. Off-gas path 14 has an inlet opened to the top surface of cooling water tank 30 on the second space 30g side and an outlet opened to the outside.

Controller 8 beneficially has a control function, and includes a computer system (not illustrated) including a computing processor (not illustrated) and a storage configured to store a control program (not illustrated). Examples of the computing processor include a central processing unit (CPU). Examples of the storage include a memory. The CPU executes the control program stored in the memory, whereby the computer system functions as controller 8. Here, the control program executed by the CPU is beforehand stored in the memory of the computer system, but, may be stored a non-transitory recording medium, such as a memory card, and provided, or may be provided via a telecommunication line, such as the Internet.

Barometer 20 is a pressure gauge configured to measure atmospheric pressure.

Cooling water tank 30 is a water tank configured to store generation water generated by the operation of fuel cell stack 4 as cooling water 30r. Cooling water tank 30 is disposed at a position lower than fuel cell stack 4, and is capable of causing generated water discharged via oxidant gas discharge path 13 to fall by gravity and collecting the falling generated water as cooling water 30r.

Cooling water tank 30 has an approximately closed structure in which cooling water tank 30 is closed except connected portions to oxidant gas supply path 11, oxidant gas humidification path 12, oxidant gas discharge path 13, off-gas path 14, and cooling water path 40.

An oxidant gas circulation space inside cooling water tank 30 is divided, by shielding plate 30s, into first space 30f allowing the circulation of humidified oxidant gas and second space 30g opened to the open air and allowing the circulation of yet-to-be-used oxidant gas.

On the first space 30f side, oxidant gas supply path 11 configured to supply oxidant gas to fuel cell stack 4 and oxidant gas humidification path 12 are connected to cooling water tank 30. On the second space 30g side, oxidant gas discharge path 13 and off-gas path 14 are connected to cooling water tank 30.

Cooling water path 40 annularly connects cooling water tank 30, fuel cell stack 4, and cooling water pump 10. Furthermore, cooling water path 40 is configured such that cooling water 30r in cooling water tank 30 is supplied to fuel cell stack 4 by cooling water pump 10 (via cooling water pump 10), and cooling water 30r having exchanged heat with fuel cell stack 4 returns to cooling water tank 30.

Heater 60 is positioned in cooling water storage 30d storing cooling water 30r in cooling water tank 30 (at a portion soaked in cooling water 30r), and configured to heat cooling water 30r (to adjust the temperature of cooling water 30r).

First thermometer 61 is a thermometer provided at a point in cooling water path 40 at which cooling water 30r is returning to cooling water tank 30 after heat exchange with fuel cell stack 4, and configured to measure the temperature of cooling water 30r flowing through cooling water path 40.

Fuel cell system 100 is configured such that, during the stop of power generation of fuel cell stack 4, cathode 4b is not filled with cooling water 30r although the inlet of oxidant gas humidification path 12 is completely submerged in water.

[1-2. Operation]

The operation and function of fuel cell system 100 configured as described above will be described below.

First, the operation of fuel cell system 100 during the stop of power generation will be described, based on FIG. 1.

In the first embodiment, the fuel gas supplied from fuel gas supply device 1 mainly contains hydrogen. In the case where the fuel gas supplied from fuel gas supply device 1 is produced by reforming a hydrocarbon-based source gas, the fuel gas sometimes contains, for example, carbon dioxide gas, carbon monoxide gas, methane gas, nitrogen gas, argon gas, and vapor, as impurities. The oxidant gas supplied from oxidant gas supply unit 15 is air, and mainly includes nitrogen, oxygen, argon, and carbon dioxide.

During the stop of power generation of fuel cell stack 4, the supply of the fuel gas for power generation from fuel gas supply device 1 to anode 4a is stopped, and unreacted fuel gas discharge path 5 is also closed. However, even after the stop of power generation of fuel cell stack 4, the fuel gas continues to be periodically supplied from fuel gas supply device 1 to anode 4a so as to keep anode 4a at a positive pressure, whereby the inflow of the oxidant gas into anode 4a from the outside of fuel cell system 100 is prevented.

Furthermore, during the stop of power generation of fuel cell stack 4, fuel cell system 100 stops oxidant gas supply unit 15. When fuel cell system 100 stops oxidant gas supply unit 15, both the pressure of first space 30f and the pressure of second space 30g in cooling water tank 30 become atmospheric pressure. This is because oxidant gas supply unit 15 has no function to cut off the oxidant gas, or off-gas path 14 allows communication between second space 30g of cooling water tank 30 and the open air (atmosphere).

Therefore, both the liquid surface of first space 30f and the liquid surface of second space 30g in cooling water tank 30 during the stop of power generation of fuel cell stack 4 are in agreement with the power-generation-stop liquid surface 30a. During the stop of power generation of fuel cell stack 4, an outlet (downstream end) of oxidant gas supply path 11, the inlet (upstream end) of oxidant gas humidification path 12, and an outlet (downstream end) of oxidant gas discharge path 13 are positioned below power-generation-stop liquid surface 30a, and thereby become submerged in cooling water 30r.

With such submerged state, the oxidant gas remaining in cathode 4b, oxidant gas humidification path 12, and oxidant gas discharge path 13 can be sealed therein.

Next, the oxidant gas remaining in cathode 4b, oxidant gas humidification path 12, and oxidant gas discharge path 13 after the stop of power generation of fuel cell stack 4 is defined as a remaining oxidant gas, and a method for controlling the pressure of the remaining oxidant gas will be described.

As a first condition, the pressure of the remaining oxidant gas at temperature T0 (K), which is a high temperature after the stop of fuel cell stack 4 is represented by P0 (Pa), and the volume thereof is represented by V0 ($m^3$). Immediately after the stop of power generation of fuel cell stack 4, pressure P0 (kPa) of the remaining oxidant gas can be approximated to be equal to atmospheric pressure. That is, pressure P0 (Pa) can be called atmospheric pressure P0 (Pa). Temperature T0 (K) is approximately equal to a temperature during the operation of fuel cell stack 4.

As a second condition, the pressure of the remaining oxidant gas at the time when oxygen in the remaining oxidant gas is completely consumed by the fuel gas in anode 4a is represented by P1 (Pa), and the volume thereof is represented by V1 ($m^3$). When the oxidant gas is air, the nitrogen content of the air is 79(%) and the oxygen content of the air is 21(%), and accordingly, pressure P1 (Pa) is expressed by the following (Equation 1).

[Equation 1]

$$P1 = 0.79 \times P0$$

Since only the consumption of oxygen is taken into consideration, volume V1 ($m^3$) is equal to volume V0 ($m^3$).

As a third condition, in addition to the consumption of oxygen of the remaining oxidant gas, a decrease in the temperature of fuel cell stack 4 is now discussed. The pressure of the remaining oxidant gas at this time is represented by P2 (Pa) and the temperature thereof is represented by T2 (K). In order to determine the degree of a decrease in pressure P2 (Pa), volume V2 (m$^3$) is defined to be equal to V0 (m$^3$). Pressure P2 (Pa) of the remaining oxidant gas at this time is expressed by the following (Equation 2).

[Equation 2]

$$P2 = 0.79 \times P0 \times \frac{T2}{T0}$$

Since T2 (K) < T0 (K) holds, pressure P2 (Pa) becomes lower than P0 (Pa), whereby a negative pressure is generated. With the generated negative pressure, cooling water 30r in cooling water tank 30 is sucked in via oxidant gas humidification path 12 and oxidant gas discharge path 13 until pressure P2 (Pa) becomes balanced with atmospheric pressure P0 (Pa). A difference in water head, that is, the height of cooling water 30r sucked in at this time is represented by h (m).

As a fourth condition, the balance between pressure P2 (Pa) of the remaining oxidant gas calculated under the third condition and atmospheric pressure P0 (Pa) is now discussed. The density of cooling water 30r in cooling water tank 30 is represented by $\rho$ (kg/ m$^3$); gravitational acceleration is represented by g (m/s$^2$); a difference in water head from power-generation-stop liquid surface 30a generated with a negative pressure is represented by h (m); and the pressure of the remaining oxidant gas when balanced with atmospheric pressure is represented by P3 (Pa). Pressure P3 (Pa) of the remaining oxidant gas at this time is expressed by the following (Equation 3).

[Equation 3]

$$P3 = P0 - \rho gh$$

The pipe internal cross-section area of oxidant gas humidification path 12 and the pipe cross-section area of oxidant gas discharge path 13 are each represented by S (m$^2$). When the volume of the remaining oxidant gas having pressure P3 (Pa) balanced with atmospheric pressure via difference in water head h (m) is represented by V3 (m$^3$), volume V3 (m$^3$) is expressed by the following (Equation 4).

[Equation 4]

$$V3 = V0 - Sh$$

From the above, using the Boyle-Charles law and (Equation 4), pressure P3 (Pa) of the remaining oxidant gas when balanced with atmospheric pressure is expressed by the following (Equation 5).

[Equation 5]

$$P3 = 0.79 \times P0 \times \frac{T2}{T0} \times \frac{V0}{V0 - Sh}$$

In accordance with (Equation 5), when temperature T2 (K) of the remaining oxidant gas is set at a higher temperature, pressure P3 (Pa) is higher, meanwhile, temperature T2 (K) is set at a lower temperature, pressure P3 (Pa) is lower.

(Equation 3) and (Equation 5) are in agreement with each other, and therefore, when these equations are regarded as making a quadratic equation for difference in water head h (m) and solved, then difference in water head h (m) can be determined by adjusting temperature T2 (K) of the remaining oxidant gas. Thus, pressure P3 (Pa) can be controlled using (Equation 3), and volume V3 (m$^3$) can be controlled using (Equation 4).

When a temperature measured by first thermometer 61 is represented by TK (K), temperature TK (K) of cooling water 30r flowing through cooling water path 40 and temperature T2 (K) of the remaining oxidant gas in fuel cell stack 4 can be regarded as being approximately equal to each other. Therefore, by adjusting the temperature of cooling water 30r in cooling water tank 30, temperature T2 (K) of the remaining oxidant gas can be varied and pressure P3 (Pa) of the remaining oxidant gas and volume V3 ($m^3$) of the remaining oxidant gas can be controlled.

Next, a method for controlling the temperature of cooling water 30r in cooling water tank 30 to a predetermined temperature TS (K) will be described. A rated heat generation amount of heater 60 is represented by Q (W); the operation amount of heater 60 is represented by H (%); and the efficiency of heat transfer from heater 60 to cooling water 30r is represented by γ (-). The specific heat of cooling water 30r is represented by Cp (J/kg·K), and the mass thereof is represented by W (kg). At this time, heating amount Q1 (W) in which heater 60 is capable of heating cooling water 30r is expressed by the following (Equation 6).

[Equation 6]

$$Q1 = \gamma \times H \times Q$$

When cooling water 30r is heated in heating amount Q1 (W) for time t (s), the following approximate relation of (Equation 7) holds.

[Equation 7]

$$Q1 \times t = Cp \times W \times (TS - T2)$$

Heating amount Q1 (W) in (Equation 6) and heating amount Q1 (W) in (Equation 7) are equal to each other, which leads to the following (Equation 8).

[Equation 8]

$$TS - T2 = \frac{\gamma HQt}{CpW}$$

Thus, the heating amount Q1 (W) of heater 60 can be adjusted by controlling operation amount H (%) of heater 60. Thus, temperature difference TS - T2 (K) obtained by making the temperature of cooling water 30r in cooling water tank 30 equal to predetermined temperature TS (K), is varied, so that temperature T2 (K) of the remaining oxidant gas can be controlled to predetermined temperature TS (K).

When the volume of cathode 4b is represented by VC ($m^3$), VC ($m^3$) = V3 ($m^3$) holds in order to prevent cooling water 30r sucked-in via oxidant gas humidification path 12 and oxidant gas discharge path 13 from flowing into cathode 4b. Therefore, the temperature of cooling water 30r is controlled to predetermined temperature TS (K) so that the volume of the remaining oxidant gas reaches VC ($m^3$).

FIG. 2 is a diagram illustrating a relation between pressure P3 (Pa) and volume V3 ($m^3$) of the remaining oxidant gas with respect to temperature T2 (K) of the remaining oxidant gas in the first embodiment. Pressure P3 (Pa) of the remaining oxidant gas and volume V3 ($m^3$) of the remaining oxidant gas in the case of controlling temperature T2 (K) of the remaining oxidant gas will be described, based on FIG. 2.

When temperature T2 (K) of the remaining oxidant gas decreases, pressure P3 (Pa) of the remaining oxidant gas and volume V3 ($m^3$) of the remaining oxidant gas decrease in accordance with (Equation 4) and (Equation 5).

When volume V3 ($m^3$) of the remaining oxidant gas becomes smaller than volume VC ($m^3$) of cathode 4b, sucked-in cooling water 30r flows into cathode 4b. Therefore, when volume V3 ($m^3$) of the remaining oxidant gas becomes equal to volume VC ($m^3$) of cathode 4b, targeted predetermined temperature TS (K) of cooling water 30r can be achieved.

In other words, operation amount H (%) of heater 60 is manipulated in (Equation 8) so as to achieve a temperature equal to or higher than predetermined temperature T2 (K), whereby cooling water 30r having a temperature equal to or higher than predetermined temperature TS (K) is supplied to fuel cell stack 4 by cooling water pump 10.

Thus, temperature T2 (K) of the remaining oxidant gas can be made equal to or higher than predetermined temperature TS (K), and volume V3 ($m^3$) of the remaining oxidant gas can be made equal to or larger than volume VC ($m^3$) of cathode 4b, so that cathode 4b can be sealed without being filled with cooling water 30r.

The behaviors after the stop of power generation of fuel cell stack 4 were described above. When the stop of power generation of fuel cell stack 4 continues for a long period, the fuel gas is supplied to maintain anode 4a at a positive pressure, and a part of the fuel gas supplied to anode 4a penetrates electrolyte membrane 4c and is mixed with the oxidant gas remaining in cathode 4b. Owing to the fuel gas passing from anode 4a to cathode 4b via electrolyte membrane 4c, pressure P3 (Pa) of the mixed remaining oxidant gas becomes equal to atmospheric pressure.

Thus, difference in water head h (m) from power-generation-stop liquid surface 30a associated with a negative pressure is approximately 0, and cooling water 30r sucked in via oxidant gas humidification path 12 and oxidant gas discharge path 13 is collected again in cooling water tank 30.

Next, operations during the operation of the fuel cell system 100 will be described, based on FIG. 1.

As described above, in the first embodiment, the fuel gas supplied from fuel gas supply device 1 mainly contains hydrogen. For example, in the case where the fuel gas supplied from fuel gas supply device 1 is produced by reforming from a hydrocarbon-based source gas, the fuel gas sometimes contains, for example, carbon dioxide gas, carbon monoxide gas, methane gas, nitrogen gas, argon gas, and vapor, as impurities. The oxidant gas supplied from oxidant gas supply unit 15 is air, and mainly includes nitrogen, oxygen, argon, and carbon dioxide.

During the operation of fuel cell stack 4, the fuel gas is supplied from fuel gas supply device 1 to anode 4a of fuel cell stack 4, meanwhile the oxidant gas is supplied from oxidant gas supply unit 15 to cathode 4b of fuel cell stack 4.

During the operation of fuel cell stack 4, the oxidant gas passes through oxidant gas supply path 11 and is humidified with cooling water 30r in cooling water tank 30, and then supplied to cathode 4b through first space 30f and oxidant gas humidification path 12.

Unreacted oxidant gas not having been used in cathode 4b and generated water are supplied to cooling water tank 30 through oxidant gas discharge path 13. Of the unreacted oxidant gas and the generated water supplied to cooling water tank 30, the generated water is collected as cooling water 30r in cooling water tank 30. The remaining unreacted oxidant gas is discharged to the outside of fuel cell system 100 through second space 30g and off-gas path 14.

The inside of cooling water tank 30 is divided halfway by shielding plate 30s, so that, through a gap between the bottom surface of cooling water tank 30 and the lower end of shielding plate 30s, cooling water 30r in cooling water tank 30 can go back and forth between the first space 30f side and the second space 30g side.

A liquid surface of cooling water 30r present on the first space 30f side during the operation of fuel cell stack 4 is defined as first operational liquid surface 30b, meanwhile a liquid surface of cooling water 30r present on the second space 30g side during the operation of fuel cell stack 4 is defined as second operational liquid surface 30c.

During the operation of fuel cell stack 4, the oxidant gas having a pressure increased by oxidant gas supply unit 15 is supplied to first space 30f. On the other hand, similarly, the pressure of oxidant gas is increased so as to supply the oxidant gas from oxidant gas supply unit 15 to second space 30g, but, second space 30g is positioned downstream of first space 30f in the flow direction of the oxidant gas, and accordingly the pressure decreases mainly by a pressure loss of cathode 4b.

Thus, during the operation of fuel cell stack 4, second operational liquid surface 30c as a liquid surface during the operation of fuel cell stack 4 is positioned higher than first operational liquid surface 30b also as a liquid surface during the operation of fuel cell stack 4. During the operation of fuel cell stack 4, the outlet (downstream end) of oxidant gas supply path 11 is positioned below first operational liquid surface 30b and thereby submerged in cooling water 30r.

During the operation of fuel cell stack 4, the inlet (upstream end) of oxidant gas humidification path 12 is positioned above first operational liquid surface 30b, and thereby is present inside first space 30f without being submerged in cooling water 30r. During the operation of fuel cell stack 4, the outlet (downstream end) of oxidant gas discharge path 13 is positioned below second operational liquid surface 30c, and thereby submerged in cooling water 30r.

[1-3. Effects]

As described above, fuel cell system 100 in the present embodiment includes fuel cell stack 4, cooling water path 40, cooling water tank 30, cooling water pump 10, oxidant gas supply unit 15, oxidant gas supply path 11, oxidant gas humidification path 12, oxidant gas discharge path 13, and off-gas path 14.

Fuel cell stack 4 is a polymer electrolyte fuel cell stack configured to generate electric power by causing a reaction between a fuel gas supplied to anode 4a and an oxidant gas supplied to cathode 4b.

Cooling water path 40 is configured to allow the circulation of cooling water 30r that exchanges heat with fuel cell stack 4.

Cooling water tank 30 is an approximately closed tank provided at a position vertically lower than fuel cell stack 4 in cooling water path 40. Cooling water tank 30 includes gas storage 30e and cooling water storage 30d configured to store cooling water 30r. In the installed state of the fuel cell system 100, gas storage 30e is positioned above cooling water storage 30d. Gas storage 30e is divided into first space 30f and second space 30g in a manner that prevents first space 30f and second space 30g from communicating with each other, regardless of an operational state of fuel cell stack 4.

Cooling water pump 10 is provided in cooling water path 40 to pump up cooling water 30r in cooling water tank 30 and supply cooling water 30r to fuel cell stack 4.

Oxidant gas supply unit 15 is configured to supply the oxidant gas. Furthermore, oxidant gas supply path 11 is configured to connect oxidant gas supply unit 15 to cooling water tank 30 to supply the oxidant gas to cooling water 30r in cooling water storage 30d below first space 30f.

Oxidant gas humidification path 12 has an inlet opened to first space 30f and an outlet connected to the inlet of cathode 4b so as to allow the supply, to cathode 4b, of the oxidant gas discharged from oxidant gas supply path 11 and humidified and collected in first space 30f.

Oxidant gas discharge path 13 is configured to allow the discharge of the oxidant gas discharged from the outlet of cathode 4b without being used for the reaction in fuel cell stack 4, to cooling water 30r in cooling water storage 30d below second space 30g. Oxidant gas discharge path 13 has an inlet connected to the outlet of cathode 4b and an outlet opened to cooling water 30r in cooling water storage 30d below second space 30g.

Off-gas path 14 is configured to allow the discharge, to the outside, of the oxidant gas discharged from oxidant gas discharge path 13, subjected to gas-liquid separation, and collected in second space 30g, and has an inlet opened to second space 30g and an outlet opened to the outside.

Furthermore, fuel cell system 100 in the present embodiment is configured to control the temperature of the remaining oxidant gas so that, during the stop of power generation of fuel cell stack 4, cathode 4b is prevented from being filled with cooling water 30r although the inlet of oxidant gas humidification path 12 is completely submerged in water.

During the stop of power generation of fuel cell stack 4, cathode 4b, oxidant gas humidification path 12, and oxidant gas discharge path 13 are put under negative pressure, whereby cooling water 30r in cooling water tank 30 is sucked up through oxidant gas humidification path 12 and oxidant gas discharge path 13. To solve this, those skilled in the art are capable of appropriately designing the dimensions and the like of each constituent of fuel cell system 100 to prevent cathode 4b from being filled with cooling water 30r. Examples of the dimensions and the like of each constituent of fuel cell system 100 include the dimensions of the inside (including the paths) of cooling water tank 30, the amount of cooling water 30r in cooling water tank 30, the internal diameter and length of each of oxidant gas humidification path 12 and oxidant gas discharge path 13, the volume (capacity) of cathode 4b, and the distance in the height direction between fuel cell stack 4 and cooling water tank 30. The thus designed fuel cell system is capable of preventing cathode 4b from being filled with cooling water 30r during the stop of power generation of fuel cell stack 4, without circulating cooling water 30r by using cooling water pump 10 or without heating cooling water 30r by using heater 60.

In contrast, fuel cell system 100 in the present embodiment is configured to control the temperature of the remaining oxidant gas so that, during the stop of power generation of fuel cell stack 4, cathode 4b is prevented from being filled with cooling water 30r although the inlet of oxidant gas humidification path 12 is completely submerged in water. Thus, fuel cell system 100 in the present embodiment is capable of sealing the cathode path without cathode 4b being filled with cooling water 30r during the stop of power generation of fuel cell stack 4.

Thus, fuel cell system 100 substantially prevents the inflow of air without causing cooling water 30r to stay inside cathode 4b during the stop of power generation, whereby fuel cell system 100 can substantially prevent water clogging at startup (at the start of power generation) to achieve stable power generation.

In addition to this, fuel cell system 100 does not need to be subject to limitations to, for example, the dimensions of each constituent in order to prevent cathode 4b from being filled with cooling water 30r during the stop of power generation of fuel cell stack 4 although the inlet of oxidant gas humidification path 12 is completely submerged in water. Hence, fuel cell system 100 can enhance design flexibility for each constituent of fuel cell system 100.

As described in the present embodiment, fuel cell system 100 includes heater 60 and controller 8. Heater 60 is provided in cooling water tank 30 and configured to adjust the temperature of cooling water 30r. Controller 8 continues to operate cooling water pump 10 even after the stop of power generation of fuel cell stack 4, and controls the temperature of cooling water 30r by using heater 60 so as to prevent cathode 4b from being filled with cooling water 30r during the stop of power generation of fuel cell stack 4 although the inlet of oxidant gas humidification path 12 is completely submerged in water.

Unless cooling water 30r heated to a predetermined temperature by heater 60 is circulated by cooling water pump 10 during the stop of power generation of fuel cell stack 4, there is a risk of cathode 4b being filled with cooling water 30r. To solve this, fuel cell system 100 circulates cooling water 30r by using cooling water pump 10 during the stop of power generation of fuel cell stack 4, cooling water 30r having been heated to a predetermined temperature by heater 60. Thus, during the stop of power generation of fuel cell stack 4, fuel cell system 100 can suck cooling water 30r from cooling water tank 30 and introduce cooling water 30r into oxidant gas humidification path 12 and oxidant gas discharge path 13, while adjusting the temperature of the remaining oxidant gas in cathode 4b. As a result, fuel cell system 100 can seal cathode 4b without causing cathode 4b to be filled with cooling water 30r. Thus, fuel cell system 100 substantially prevents the inflow of air without causing cooling water 30r to stay inside cathode 4b during the stop of power generation, whereby fuel cell system 100 can substantially prevent water clogging in cathode 4b at startup (at the start of power generation) to achieve stable power generation.

Furthermore, fuel cell system 100 according to the present embodiment is an example of a thermometer in the present disclosure, and includes first thermometer 61 configured to measure the temperature of cooling water 30r discharged from fuel cell stack 4.

More specifically, first thermometer 61 is configured to measure the temperature of cooling water 30r on its way from fuel cell stack 4 to cooling water tank 30 in cooling water path 40. Controller 8 is configured to estimate the temperature of cathode 4b (the sealed-in remaining oxidant gas) from a value indicated by first thermometer 61.

Thus, fuel cell system 100 can measure the temperature of the inside of fuel cell stack 4 positioned upstream of first thermometer 61. Therefore, fuel cell system 100 can estimate the temperature of cathode 4b (the sealed-in remaining oxidant gas), based on a value indicated by first thermometer 61, and adjust the temperature of cooling water 30r by using heater 60, based on the estimated value to control the pressure of the remaining oxidant gas.

In the present embodiment, fuel cell system 100 may be modified such that first thermometer 61 measures the temperature of the oxidant gas in oxidant gas discharge path 13, instead of the temperature of cooling water 30r in cooling water path 40.

Thus, the fuel cell system according to the modification can estimate the temperature of cathode 4b (the sealed-in remaining oxidant gas), based on a value measured by first thermometer 61, and adjusting the temperature of cooling water 30r by using heater 60, based on the estimated value, to control the pressure of the remaining oxidant gas.

(Second Embodiment)

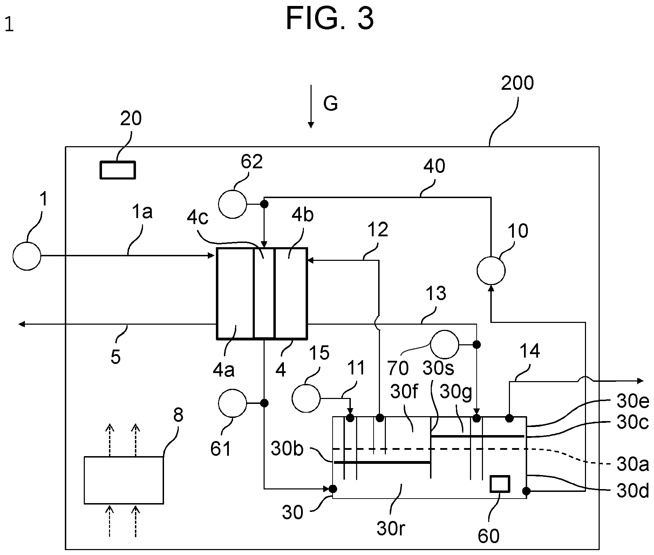

Hereinafter, using FIG. 2 and FIG. 3, fuel cell system 200 in a second embodiment will be described as an example of the fuel cell system according to the present disclosure.

[2-1. Configuration]

FIG. 3 is a block diagram illustrating a configuration of fuel cell system 200 in the second embodiment. As illustrated in FIG. 3, fuel cell system 200 includes fuel gas supply path 1a, fuel cell stack 4, unreacted fuel gas discharge path 5, controller 8, cooling water pump 10, oxidant gas supply path 11, oxidant gas humidification path 12, oxidant gas discharge path 13, off-gas path 14, oxidant gas supply unit 15, barometer 20, cooling water tank 30, cooling water path 40, heater 60, first thermometer 61, second thermometer 62, and water gauge 70.

The direction of G in FIG. 3 indicates the direction of gravity. In other words, constituents illustrated on the upper side of FIG. 3 are present at vertically relatively higher positions, meanwhile constituents illustrated on the lower side of FIG. 3 are present at vertically relatively lower positions.

Fuel cell system 200 in the second embodiment differs from fuel cell system 100 in that, besides the constituents of fuel cell system 100 in the first embodiment, fuel cell system 200 includes second thermometer 62 and water gauge 70. The same constituents as those of fuel cell system 100 in the first embodiment are assigned with the same reference marks, and redundant descriptions thereof are omitted.

Second thermometer 62 is a thermometer configured to measure the temperature of cooling water 30r (positioned upstream of fuel cell stack 4) flowing into fuel cell stack 4. Second thermometer 62 is provided on a path upstream of fuel cell stack 4 in cooling water path 40 (a path between fuel cell stack 4 and cooling water pump 10).

Water gauge 70 is provided in oxidant gas discharge path 13 and configured to measure the water level of cooling water 30r sucked in from cooling water tank 30 and detect whether cooling water 30r is sucked in to reach a predetermined water level.

[2-2. Operation]

The operation and function of fuel cell system 200 configured as described above will be described below.

First, the operation of fuel cell system 200 during the stop of power generation will be described, based on FIG. 3.

Also in the second embodiment, the fuel gas supplied from fuel gas supply device 1 mainly contains hydrogen. In the case where the fuel gas supplied from fuel gas supply device 1 is produced by reforming a hydrocarbon-based source gas, the fuel gas sometimes contains, for example, carbon dioxide gas, carbon monoxide gas, methane gas, nitrogen gas, argon gas, and vapor, as impurities. The oxidant gas supplied from oxidant gas supply unit 15 is air, and mainly includes nitrogen, oxygen, argon, and carbon dioxide.

During the stop of power generation of fuel cell stack 4, the supply of the fuel gas for power generation from fuel gas supply device 1 to anode 4a is stopped, and also unreacted fuel gas discharge path 5 is also closed. However, even after the stop of power generation of fuel cell stack 4, the fuel gas continues to be periodically supplied from fuel gas supply device 1 to anode 4a so as to keep anode 4a at a positive pressure, whereby the inflow of the oxidant gas into anode 4a from the outside of fuel cell system 100 is prevented.

Furthermore, during the stop of power generation of fuel cell stack 4, fuel cell system 200 stops oxidant gas supply unit 15. When fuel cell system 200 stops oxidant gas supply unit 15, both the pressure of first space 30f and the pressure of second space 30g in cooling water tank 30 become atmospheric pressure. This is because oxidant gas supply unit 15 has no function to cut off the oxidant gas, or because off-gas path 14 allows communication between second space 30g of cooling water tank 30 and the open air (atmosphere).

Therefore, both the liquid surface of first space 30f and the liquid surface of second space 30g in cooling water tank 30 during the stop of power generation of fuel cell stack 4 are in agreement with power-generation-stop liquid surface 30a. During the stop of power generation of fuel cell stack 4, an outlet (downstream end) of oxidant gas supply path 11, the inlet (upstream end) of oxidant gas humidification path 12, and an outlet (downstream end) of oxidant gas discharge path 13 are each positioned below power-generation-stop liquid surface 30a, and thereby become submerged in cooling water 30r.

With such submerged state, the oxidant gas remaining in cathode 4b, oxidant gas humidification path 12, and oxidant gas discharge path 13 can be sealed therein.

Next, an oxidant gas remaining in cathode 4b, oxidant gas humidification path 12, and oxidant gas discharge path 13 after the stop of power generation of fuel cell stack 4 is defined as a remaining oxidant gas, and a method for controlling the pressure of the remaining oxidant gas will be described.

As a first condition, the pressure of the remaining oxidant gas at temperature T0 (K), which is a high temperature after the stop of fuel cell stack 4, is represented by P0 (Pa), and the volume of the remaining oxidant gas is represented by V0 ($m^3$). Immediately after the stop of power generation of fuel cell stack 4, pressure P0 (kPa) of the remaining oxidant gas can be approximated to be equal to atmospheric pressure. That is, pressure P0 (Pa) can be called atmospheric pressure P0 (Pa). Temperature T0 (K) is approximately equal to a temperature during the operation of fuel cell stack 4.

As a second condition, the pressure of the remaining oxidant gas at the time when oxygen in the remaining oxidant gas is completely consumed by the fuel gas in anode 4a is represented by P1 (Pa), and the volume thereof is represented by V1 ($m^3$). When the oxidant gas is air, the nitrogen content of the air is 79(%) and the oxygen content of the air is 21(%), and hence, pressure P1 (Pa) is expressed by (Equation 1).

Since only the consumption of oxygen is taken into consideration, volume V1 ($m^3$) is equal to volume V0 ($m^3$).

As a third condition, in addition to the consumption of oxygen of the remaining oxidant gas, a decrease in the temperature of fuel cell stack 4 is now discussed. The pressure of the remaining oxidant gas at this time is represented by P2 (Pa) and the temperature thereof is represented by T2 (K). In order to determine the degree of a decrease in pressure P2 (Pa), volume V2 ($m^3$) is defined to be equal to V0 ($m^3$). Pressure P2 (Pa) of the remaining oxidant gas at this time is expressed by (Equation 2).

Since T2 (K) < T0 (K) holds, pressure P2 (Pa) becomes lower than P0 (Pa), whereby a negative pressure is generated. With the generated negative pressure, cooling water 30r in cooling water tank 30 is sucked in via oxidant gas humidification path 12 and oxidant gas discharge path 13 until pressure P2 (Pa) becomes balanced with atmospheric pressure P0 (Pa). A difference in water head, that is, the height of cooling water 30r sucked in at this time is represented by h (m).

As a fourth condition, the balance between pressure P2 (Pa) of the remaining oxidant gas calculated under the third condition and atmospheric pressure P0 (Pa) is now discussed. The density of cooling water 30r in cooling water tank 30 is represented by $\rho$ (kg/ $m^3$); gravitational acceleration is represented by g (m/$s^2$); a difference in water head from power-generation-stop liquid surface 30a, the difference being associated with a negative pressure, is represented by h (m); and the pressure of the remaining oxidant gas when balanced with atmospheric pressure is represented by P3 (Pa). Pressure P3 (Pa) of the remaining oxidant gas at this time is expressed by (Equation 3).

The pipe cross-section area of oxidant gas humidification path 12 and the pipe cross-section area of oxidant gas discharge path 13 are each represented by S ($m^2$). When the volume of the remaining oxidant gas having pressure P3 (Pa) balanced with atmospheric pressure via difference in water head h (m) is represented by V3 ($m^3$), volume V3 ($m^3$) is expressed by (Equation 4).

From the above, by using the Boyle-Charles law and (Equation 4), pressure P3 (Pa) of the remaining oxidant gas when balanced with atmospheric pressure is expressed by (Equation 5).

In accordance with (Equation 5), when temperature T2 (K) of the remaining oxidant gas is set at a higher temperature, pressure P3 (Pa) is higher, meanwhile, temperature T2 (K) is set at a lower temperature, pressure P3 (Pa) is lower.

(Equation 3) and (Equation 5) are in agreement with each other, and therefore, when these equations are regarded as making a quadratic equation for difference in water head h (m) and solved, difference in water head h (m) can be determined by adjusting temperature T2 (K) of the remaining oxidant gas. Thus, pressure P3 (Pa) can be controlled in accordance with (Equation 3), and volume V3 ($m^3$) can be controlled in accordance with (Equation 4).

When a temperature measured by first thermometer 61 is represented by TK (K), temperature TK (K) of cooling water 30r flowing through cooling water path 40 and temperature T2 (K) of the remaining oxidant gas in fuel cell stack 4 can be regarded as being approximately equal to each other. Therefore, by adjusting the temperature of cooling water 30r in cooling water tank 30, temperature T2 (K) of the remaining oxidant gas can be varied and pressure P3 (Pa) of the remaining oxidant gas and volume V3 ($m^3$) of the remaining oxidant gas can be controlled.

Next, a method for controlling the temperature of cooling water 30r in cooling water tank 30 to predetermined temperature TS (K) will be described. A rated heat generation amount of heater 60 is represented by Q (W); the operation amount of heater 60 is represented by H (%); and the efficiency of heat transfer from heater 60 to cooling water 30r is represented by γ (-). The specific heat of cooling water 30r is represented by Cp (J/kg·K), and the mass thereof is represented by W (kg). At this time, heating amount Q1 (W) in which heater 60 is capable of heating cooling water 30r is expressed by (Equation 6).

When cooling water 30r is heated in heating amount Q1 (W) for time t (s), the approximate relation of (Equation 7) holds.

Heating amount Q1 (W) in (Equation 6) and heating amount Q1 (W) in (Equation 7) are the same, which leads to the following (Equation 8).

Thus, the heating amount Q1 (W) of heater 60 can be adjusted by controlling operation amount H (%) of heater 60. Thus, temperature difference TS - T2 (K) obtained by making the temperature of cooling water 30r in cooling water tank 30 equal to predetermined temperature TS (K) is varied, so that temperature T2 (K) of the remaining oxidant gas can be controlled to predetermined temperature TS (K).

When the volume of cathode 4b is represented by VC (m³), VC (m³) = V3 (m³) holds in order to prevent cooling water 30r sucked in via oxidant gas humidification path 12 and oxidant gas discharge path 13 from flowing into the inside of cathode 4b. Accordingly, the temperature of cooling water 30r is controlled to predetermined temperature TS (K) so that the volume of the remaining oxidant gas becomes equal to VC m³).

Water gauge 70 is provided in oxidant gas discharge path 13. Here, the distance from power-generation-stop liquid surface 30a to water gauge 70 is represented by J (m). By adjusting temperature T2 (K) of the remaining oxidant gas so that difference in water head h (m) coincides with J (m), fuel cell system 200 can prevent cooling water 30r sucked in from cooling water tank 30 from flowing into cathode 4b.

Pressure P3 (Pa) of the remaining oxidant gas and volume V3 (m³) of the remaining oxidant gas in the case of controlling temperature T2 (K) of the remaining oxidant gas will be described, based on FIG. 2.

When temperature T2 (K) of the remaining oxidant gas decreases, pressure P3 (Pa) of the remaining oxidant gas and volume V3 (m³) of the remaining oxidant gas decrease in accordance with (Equation 4) and (Equation 5).

When volume V3 (m³) of the remaining oxidant gas becomes smaller than volume VC (m³) of cathode 4b, the inflow of sucked-in cooling water 30r into cathode 4b is caused. Therefore, when volume V3 (m³) of the remaining oxidant gas becomes equal to volume VC (m³) of cathode 4b, targeted predetermined temperature TS (K) of cooling water 30r can be achieved.

In other words, operation amount H (%) of heater 60 is manipulated in (Equation 8) so as to achieve a temperature equal to or higher than predetermined temperature T2 (K), whereby cooling water 30r having a temperature equal to or higher than predetermined temperature TS (K) is supplied to fuel cell stack 4 by cooling water pump 10. Thus, temperature T2 (K) of the remaining oxidant gas can be made equal to or higher than predetermined temperature TS (K), and volume V3 (m³) of the remaining oxidant gas can be made equal to or larger than volume VC (m³) of cathode 4b, so that cathode 4b can be sealed without being filled with cooling water 30r.

The behaviors after the stop of power generation of fuel cell stack 4 were described above. When the stop of power generation of fuel cell stack 4 continues for a long period, the fuel gas is supplied to maintain anode 4a at a positive pressure, and a part of the fuel gas supplied to anode 4a penetrates electrolyte membrane 4c and is mixed with the remaining oxidant gas in cathode 4b. Owing to the fuel gas passing from anode 4a to cathode 4b via electrolyte membrane 4c, pressure P3 (Pa) of the mixed remaining oxidant gas becomes equal to atmospheric pressure.

Thus, difference in water head h (m) from power-generation-stop liquid surface 30a, the difference being associated with a negative pressure, becomes approximately 0, and cooling water 30r sucked in via oxidant gas humidification path 12 and oxidant gas discharge path 13 is collected again in cooling water tank 30.

Next, operations during the operation of the fuel cell system 200 will be described, based on FIG. 3.

As described above, in the second embodiment, the fuel gas supplied from fuel gas supply device 1 mainly contains hydrogen. For example, in the case where the fuel gas supplied from fuel gas supply device 1 is produced by reforming a hydrocarbon-based source gas, the fuel gas sometimes contains, for example, carbon dioxide gas, carbon monoxide gas, methane gas, nitrogen gas, argon gas, and vapor, as impurities. The oxidant gas supplied from oxidant gas supply unit 15 is air, and mainly includes nitrogen, oxygen, argon, and carbon dioxide.

During the operation of fuel cell stack 4, the fuel gas is supplied from fuel gas supply device 1 to anode 4a of fuel cell stack 4, meanwhile the oxidant gas is supplied from oxidant gas supply unit 15 to cathode 4b of fuel cell stack 4.

During the operation of fuel cell stack 4, the oxidant gas passes through oxidant gas supply path 11, is humidified with cooling water 30r in cooling water tank 30, then supplied to cathode 4b through first space 30f and oxidant gas humidification path 12.

Unreacted oxidant gas not having been used in cathode 4b and generated water are supplied to cooling water tank 30 through oxidant gas discharge path 13. Of the unreacted oxidant gas and the generated water supplied to cooling water tank 30, the generated water is collected as cooling water 30r in cooling water tank 30. The remaining unreacted oxidant gas is discharged to the outside of fuel cell system 100 through second space 30g and off-gas path 14.

The inside of cooling water tank 30 is divided halfway by shielding plate 30s, so that, through a gap between the bottom surface of cooling water tank 30 and the lower end of shielding plate 30s, cooling water 30r in cooling water tank 30 can go back and forth between the first space 30f side and the second space 30g side.

A liquid surface of cooling water 30r present on the first space 30f side during the operation of fuel cell stack 4 is defined as first operational liquid surface 30b, meanwhile a liquid surface of cooling water 30r present on the second space 30g side during the operation of fuel cell stack 4 is defined as second operational liquid surface 30c.

During the operation of fuel cell stack 4, the oxidant gas having a pressure increased by oxidant gas supply unit 15 is supplied to first space 30f. On the other hand, similarly, the pressure of oxidant gas is increased in order to supply the oxidant gas from oxidant gas supply unit 15 to second space 30g, but, since second space 30g is located downstream of first space 30f in the flow direction of the oxidant gas, the pressure decreases mainly by a pressure loss of cathode 4b.

Thus, during the operation of fuel cell stack 4, second operational liquid surface 30c as a liquid surface during the operation of fuel cell stack 4 is positioned higher than first operational liquid surface 30b also as a liquid surface during the operation of fuel cell stack 4. During the operation of fuel cell stack 4, the outlet (downstream end) of oxidant gas supply path 11 is positioned below first operational liquid surface 30b, and thereby submerged in cooling water 30r.

During the operation of fuel cell stack 4, the inlet (upstream end) of oxidant gas humidification path 12 is positioned above first operational liquid surface 30b, and thereby present in first space 30f without being submerged in cooling water 30r. During the operation of fuel cell stack 4, the outlet (downstream end) of oxidant gas discharge path 13 is positioned below second operational liquid surface 30c, and thereby submerged in cooling water 30r.

[2-3. Effects]

As described above, fuel cell system 200 in the present embodiment includes fuel cell stack 4, cooling water path 40, cooling water tank 30, cooling water pump 10, oxidant gas supply unit 15, oxidant gas supply path 11, oxidant gas humidification path 12, oxidant gas discharge path 13, off-gas path 14, heater 60, water gauge 70, and controller 8.

Fuel cell stack 4 is a polymer electrolyte fuel cell stack configured to generate electric power by causing a reaction between a fuel gas supplied to anode 4a and an oxidant gas supplied to cathode 4b.

Cooling water path 40 is configured to allow the circulation of cooling water 30r that exchanges heat with fuel cell stack 4.

Cooling water tank 30 is an approximately closed tank provided at a position vertically lower than fuel cell stack 4 in cooling water path 40. Cooling water tank 30 includes gas storage 30e and cooling water storage 30d configured to store cooling water 30r. In the installed state of fuel cell system 200, gas storage 30e is positioned above cooling water storage 30d. Gas storage 30e is divided into first space 30f and second space 30g in a manner that prevents first space 30f and second space 30g from communicating with each other, regardless of an operational state of fuel cell stack 4.

Cooling water pump 10 is provided in cooling water path 40 so as to pump up cooling water 30r in cooling water tank 30 and supply cooling water 30r to fuel cell stack 4.

Oxidant gas supply unit 15 is configured to supply the oxidant gas. Furthermore, oxidant gas supply path 11 is configured to connect oxidant gas supply unit 15 to cooling water tank 30 to supply the oxidant gas to cooling water 30r in cooling water storage 30d below first space 30f.

Oxidant gas humidification path 12 is configured to allow the supply, to cathode 4b, of the oxidant gas discharged from oxidant gas supply path 11 and humidified and collected in first space 30f, and has the inlet opened to first space 30f and the outlet connected to the inlet of cathode 4b.

Oxidant gas discharge path 13 is configured to allow the discharge of the oxidant gas discharged from the outlet of cathode 4b without being used for the reaction in fuel cell stack 4, to cooling water 30r in cooling water storage 30d below second space 30g. Oxidant gas discharge path 13 has the inlet connected to the outlet of cathode 4b and the outlet opened to cooling water 30r in cooling water storage 30d below second space 30g.

Off-gas path 14 is configured to allow the discharge, to the outside, of the oxidant gas discharged from oxidant gas discharge path 13, subjected to gas-liquid separation, and collected in second space 30g, and has the inlet opened to second space 30g and the outlet opened to the outside.

Heater 60 is provided in cooling water tank 30 and is configured to adjust the temperature of cooling water 30r.

Water gauge 70 is provided in oxidant gas discharge path 13 and is configured to detect the water level of cooling water 30r in oxidant gas discharge path 13. More specifically, water gauge 70 is configured to measure the water level of cooling water 30r sucked in from cooling water tank 30 and detect whether cooling water 30r has been sucked in to a predetermined water level.

Controller 8 continues to operate cooling water pump 10 even after the stop of power generation of fuel cell stack 4. Controller 8 controls the temperature of cooling water 30r by using heater 60 so that water gauge 70 detects a predetermined water level at which, during the stop of power generation of fuel cell stack 4, cathode 4b is not filled with cooling water 30r although the inlet of oxidant gas humidification path 12 is completely submerged in water. By adjusting the temperature of cooling water 30r by using heater 60, controller 8 controls the temperature of the remaining oxidant gas.

Thus, during the stop of power generation, when sucking cooling water 30r from cooling water tank 30 and introducing cooling water 30r into oxidant gas humidification path 12 and oxidant gas discharge path 13, fuel cell system 200 can surely stop the suction of cooling water 30r at the time when cooling water 30r reaches a predetermined point of height. Thus, fuel cell system 200 can seal cathode 4b without cathode 4b being filled with cooling water 30r.

Thus, fuel cell system 200 can control the pressure of the remaining oxidant gas in cathode 4b with high accuracy and surely substantially prevent the inflow of cooling water 30r to the inside of cathode 4b during the stop of power generation. Hence, fuel cell system 200 can substantially prevent water clogging in cathode 4b at startup (at the start of power generation) to achieve stable power generation.

As described in the present embodiment, fuel cell system 200 includes first thermometer 61 as an example of a thermometer according to the present disclosure and second thermometer 62 as another example of the thermometer according to the present disclosure. First thermometer 61 is configured to measure the temperature of cooling water 30r (after the heat exchange with fuel cell stack 4) on its way from fuel cell stack 4 to cooling water tank 30 in cooling water path 40. Second thermometer 62 is configured to measure the temperature of cooling water 30r (before the heat exchange with fuel cell stack 4) on its way between cooling water pump 10 and fuel cell stack 4 in cooling water path 40. Furthermore, controller 8 is configured to estimate the temperature of cathode 4b (sealed-in remaining oxidant gas) from values indicated by first thermometer 61 and second thermometer 62.

Thus, fuel cell system 200 can measure the temperature of the inside of fuel cell stack 4. Therefore, fuel cell system 200 can estimate the temperature of cathode 4b (sealed-in remaining oxidant gas), based on values indicated by first thermometer 61 and second thermometer 62, and adjust the temperature of cooling water 30r by using heater 60, based on the estimated value. Hence, fuel cell system 200 can control the pressure of the remaining oxidant gas to surely prevent the inflow of cooling water 30r to cathode 4b.

(Other Embodiments)

As described above, the first and second embodiments were described as illustrative examples of the technology in the present disclosure. However, the technology in the present disclosure is not limited by the first and second embodiments, and is also applicable to embodiments in which modifications, substitutions, additions, omissions, or the likes are made. In addition, constituents described in the first and second embodiments can be combined to provide a new embodiment.

Then, other embodiments will be described below.

In the first and second embodiments, fuel cell systems 100 and 200 including first thermometer 61 were described.

The temperature of cooling water 30r may be estimated from a heating amount caused by giving an operation amount to heater 60. Therefore, a means for measuring the temperature of cooling water 30r is not limited to first thermometer 61. However, when a sheathed thermocouple is used as first thermometer 61, the temperature of cooling water 30r can be easily measured in real time. Therefore, a fuel cell system in other embodiments, including a sheathed thermocouple as first thermometer 61, is capable of achieving higher responsivity in temperature control to variations in temperature changes after the stop of power generation.

INDUSTRIAL APPLICABILITY

The present disclosure is applicable to a fuel cell system that collects water generated in a fuel cell stack. Specifically, the present disclosure is applicable to, for example, a pure hydrogen fuel cell system that generates electric power by using hydrogen as a fuel gas.

REFERENCE MARKS IN THE DRAWINGS

1    fuel gas supply device
1a   fuel gas supply path
4    fuel cell stack
4a   anode
4b   cathode
4c   electrolyte membrane
5    unreacted fuel gas discharge path
8    controller

| 10 | cooling water pump |
| 11 | oxidant gas supply path |
| 12 | oxidant gas humidification path |
| 13 | oxidant gas discharge path |
| 14 | off-gas path |
| 15 | oxidant gas supply unit |
| 20 | barometer |
| 30 | cooling water tank |
| 30a | power-generation-stop liquid surface |
| 30b | first operational liquid surface |
| 30c | second operational liquid surface |
| 30d | cooling water storage |
| 30e | gas storage |
| 30f | first space |
| 30g | second space |
| 30r | cooling water |
| 30s | shielding plate |
| 40 | cooling water path |
| 60 | heater |
| 61 | first thermometer |
| 62 | second thermometer |
| 70 | water gauge |
| 100 | fuel cell system |
| 200 | fuel cell system |

**Claims**

1. A fuel cell system, comprising:

a fuel cell stack being a polymer electrolyte fuel cell stack configured to generate electric power by causing a reaction between a fuel gas supplied to an anode of the fuel cell stack and an oxidant gas supplied to a cathode of the fuel cell stack;
a cooling water path configured to allow circulation of cooling water, the cooling water exchanging heat with the fuel cell stack;
a cooling water tank including:

a gas storage; and
a cooling water storage configured to store the cooling water,
the gas storage being positioned above the cooling water storage in an installed state of the fuel cell system, and divided into a first space and a second space in a manner that prevents the first space and the second space from communicating with each other, regardless of an operational state of the fuel cell stack,

wherein the cooling water tank has an approximately closed shape, and is provided at a position vertically lower than the fuel cell stack in the cooling water path;
a cooling water pump provided in the cooling water path to pump up the cooling water in the cooling water tank and supply the cooling water to the fuel cell stack;
an oxidant gas supply unit configured to supply the oxidant gas;
an oxidant gas supply path configured to connect the oxidant gas supply unit to the cooling water tank to allow supply of the oxidant gas to the cooling water in the cooling water storage below the first space;
an oxidant gas humidification path including:

an inlet opened to the first space; and
an outlet connected to an inlet of the cathode,

to allow supply of the oxidant gas to the cathode, the oxidant gas being discharged from the oxidant gas supply path and humidified and collected in the first space;
an oxidant gas discharge path including:

an inlet connected to an outlet of the cathode; and
an outlet opened to the cooling water in the cooling water storage below the second space,

to allow supply of the oxidant gas to the cooling water in the cooling water storage below the second space, the oxidant gas being discharged from the outlet of the cathode without being used for the reaction in the fuel cell stack; and
an off-gas path including:

an inlet opened to the second space; and
an outlet opened to outside,

to allow discharge of the oxidant gas to the outside, the oxidant gas being discharged from the oxidant gas discharge path, subjected to gas-liquid separation, and collected in the second space,
wherein the fuel cell system is configured to control a temperature of the oxidant gas remaining, to prevent the cathode from being filled with the cooling water during stop of power generation of the fuel cell stack although the inlet of the oxidant gas humidification path is completely submerged in water.

2.  The fuel cell system according to claim 1, further comprising:

a heater provided in the cooling water tank and configured to adjust a temperature of the cooling water; and
a controller configured to continue to operate the cooling water pump even after the stop of power generation of the fuel cell stack,
wherein the controller controls the temperature of the oxidant gas remaining, by adjusting the temperature of the cooling water by the heater to prevent the cathode from being filled with the cooling water during the stop of power generation of the fuel cell stack although the inlet of the oxidant gas humidification path is completely submerged in water.

3.  The fuel cell system according to claim 2, further comprising:

a thermometer configured to measure the temperature of the cooling water discharged from the fuel cell stack or the temperature of the oxidant gas discharged from the fuel cell stack,
wherein the controller estimates the temperature of the oxidant gas in the cathode, based on a value indicated by the thermometer.

4.  The fuel cell system according to claim 2 or claim 3, further comprising:

a water gauge provided in the oxidant gas discharge path and configured to detect a water level of the cooling water in the oxidant gas discharge path,
wherein the controller adjusts a heating amount of the heater during the stop of power generation of the fuel cell stack to allow the water gauge to detect a predetermined water level.

5.  A method for operating a fuel cell system, the fuel cell system comprising:

a fuel cell stack being a polymer electrolyte fuel cell stack configured to generate electric power by causing a reaction between a fuel gas supplied to an anode of the fuel cell stack and an oxidant gas supplied to a cathode of the fuel cell stack;
a cooling water path configured to allow circulation of cooling water, the cooling water exchanging heat with the fuel cell stack;
a cooling water tank including:

a gas storage; and
a cooling water storage configured to store the cooling water,
the gas storage being positioned above the cooling water storage in an installed state of the fuel cell system, and divided into a first space and a second space in a manner that prevents the first space and the second space from communicating with each other, regardless of an operational state of the fuel cell stack

wherein the cooling water tank has an approximately closed shape, and is provided at a position vertically lower than the fuel cell stack in the cooling water path;

a cooling water pump provided in the cooling water path to pump up the cooling water in the cooling water tank and supply the cooling water to the fuel cell stack;

an oxidant gas supply unit configured to supply the oxidant gas;

an oxidant gas supply path configured to connect the oxidant gas supply unit to the cooling water tank to allow supply of the oxidant gas to the cooling water in the cooling water storage below the first space;

an oxidant gas humidification path including:

an inlet opened to the first space; and
an outlet connected to an inlet of the cathode,

to allow supply of the oxidant gas to the cathode, the oxidant gas being discharged from the oxidant gas supply path and humidified and collected in the first space;

an oxidant gas discharge path including:

an inlet connected to an outlet of the cathode; and
an outlet opened to the cooling water in the cooling water storage below the second space,

to allow supply of the oxidant gas to the cooling water in the cooling water storage below the second space, the oxidant gas being discharged from the outlet of the cathode without being used for the reaction in the fuel cell stack;

an off-gas path including:

an inlet opened to the second space; and
an outlet opened to outside,

to discharge the oxidant gas to the outside, the oxidant gas being discharged from the oxidant gas discharge path, subjected to gas-liquid separation, and collected in the second space; and

a heater provided in the cooling water tank and configured to adjust a temperature of the cooling water, wherein the fuel cell system is configured

to continue to operate the cooling water pump even after stop of power generation of the fuel cell stack, and

to adjust the temperature of the cooling water by the heater to prevent the cathode from being filled with the cooling water during stop of power generation of the fuel cell stack although the inlet of the oxidant gas humidification path is completely submerged in water.

# FIG. 1

# FIG. 2

# FIG. 3

| INTERNATIONAL SEARCH REPORT | International application No. |
|---|---|
| | **PCT/JP2021/042977** |

**A. CLASSIFICATION OF SUBJECT MATTER**

***H01M 8/04***(2016.01)i; ***H01M 8/04228***(2016.01)i; ***H01M 8/04303***(2016.01)i; ***H01M 8/04694***(2016.01)i; ***H01M 8/04701***(2016.01)i; ***H01M 8/10***(2016.01)i
FI:   H01M8/04228; H01M8/10 101; H01M8/04 N; H01M8/04303; H01M8/04694; H01M8/04701

According to International Patent Classification (IPC) or to both national classification and IPC

**B. FIELDS SEARCHED**

Minimum documentation searched (classification system followed by classification symbols)

H01M8/04-8/0668

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2012-216358 A (ENEOS CELLTECH CO., LTD.) 08 November 2012 (2012-11-08) paragraphs [0014]-[0015], [0021], [0030]-[0035], fig. 3 | 1-5 |
| A | JP 2002-93448 A (OSAKA GAS CO., LTD.) 29 March 2002 (2002-03-29) paragraphs [0006], [0015]-[0016], [0021], [0063], fig. 1, 11 | 1-5 |
| A | JP 2011-14288 A (ENEOS CELLTECH CO., LTD.) 20 January 2011 (2011-01-20) paragraphs [0012], [0016]-[0017], fig. 1 | 1-5 |
| A | JP 2017-117518 A (HONDA MOTOR CO., LTD.) 29 June 2017 (2017-06-29) paragraphs [0055], [0058], fig. 2 | 1-5 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **17 December 2021** | **11 January 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

INTERNATIONAL SEARCH REPORT
Information on patent family members

International application No.

**PCT/JP2021/042977**

| Patent document cited in search report | | | Publication date (day/month/year) | Patent family member(s) | Publication date (day/month/year) |
|---|---|---|---|---|---|
| JP | 2012-216358 | A | 08 November 2012 | (Family: none) | |
| JP | 2002-93448 | A | 29 March 2002 | (Family: none) | |
| JP | 2011-14288 | A | 20 January 2011 | (Family: none) | |
| JP | 2017-117518 | A | 29 June 2017 | (Family: none) | |

Form PCT/ISA/210 (patent family annex) (January 2015)

**REFERENCES CITED IN THE DESCRIPTION**

**Patent documents cited in the description**

- JP 2013026182 A